# FASCICULE DE BREVET EUROPEEN

(11) **EP 3 542 686 B1**
(45) Date de publication et mention de la délivrance du brevet: **05.08.2026**
(21) Numéro de dépôt: 19163565.5
(22) Date de dépôt: 18.03.2019
(51) Int. Cl.: A47J 37/06

(54) **APPAREIL DE CUISSON DU TYPE FRITEUSE À AIR CHAUD**
HEISSLUFTFRITTEUSE
AIR FRYER

(30) Priorité: 21.03.2018 FR 1852456
(43) Date de publication de la demande: 25.09.2019
(73) Titulaire: SEB S.A., 69130 Ecully (FR)
(72) Inventeur: PRIETO, Guillaume, 21380 MARSANNAY LE BOIS (FR); CORNU, Jérémy, 69007 LYON (FR)
(74) Mandataire: SEB Développement

(56) Documents cités:
- EP-A1- 1 426 001
- EP-A1- 1 428 464
- WO-A2-2007/145516
- CN-U- 204 520 386
- CN-U- 204 636 063
- CN-U- 205 286 100
- US-A- 2 868 112

## Description

### Domaine technique

La présente invention concerne un appareil de cuisson du type friteuse à air chaud et porte tout particulièrement sur le système de support d'un panier dans une cuve de la friteuse à air chaud.

### Etat de la technique

Les appareils de cuisson du type friteuse à air chaud sont connus de l'homme du métier. De tels appareils permettent de réduire fortement la quantité de matière grasse, voire de la supprimer complètement, pendant la cuisson des aliments qui peuvent être d'origine végétale ou animale, par exemple des frites ou du poisson. En effet, la cuisson s'effectue avec peu ou pas d'huile grâce à de l'air chaud circulant dans une cuve, ce qui permet de consommer des aliments plus diététiques, croustillants à l'extérieur et moelleux à l'intérieur. Étant donné la réduction ou la suppression de l'huile pour la cuisson, ces appareils dégagent moins d'odeurs et de graisses ; leur nettoyage est en outre simplifié.

Un appareil de cuisson du type friteuse à air chaud comprend généralement une cuve amovible configurée pour recevoir un panier dans lequel sont disposés les aliments à cuire. Une fois le panier placé dans la cuve, l'ensemble est inséré dans une chambre dans laquelle est pulsé de l'air chaud au moyen d'un système de soufflage d'air chaud incorporé dans ledit appareil. L'air chaud pulsé circule dans la chambre et dans la cuve contenant le panier avec les aliments, assurant ainsi leur cuisson.

Pour assurer une cuisson homogène des aliments, le fond du panier doit être maintenu à distance du fond de la cuve et la circulation de l'air chaud doit être convenable dans la cuve.

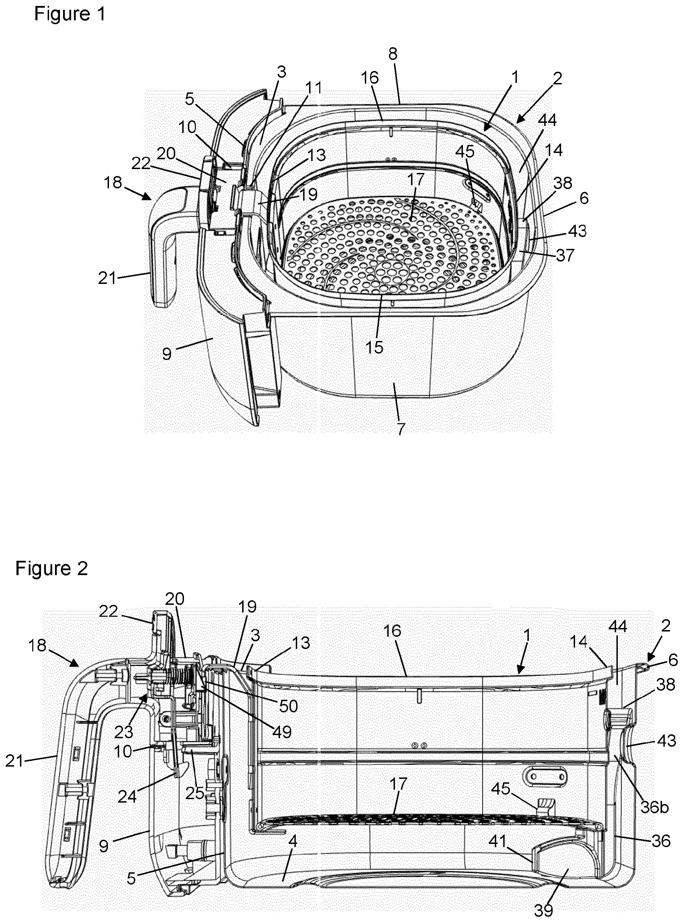

Il est connu le modèle d'utilité allemand publié sous le numéro DE202017103259U qui décrit une friteuse à air chaud dans laquelle le fond de la cuve présente des formes en relief et le panier comprend, sur sa partie avant supérieure, une poignée de manipulation munie d'une première patte qui vient en appui sur le rebord supérieur de la cuve et, sur sa partie arrière inférieure, deux secondes pattes venant en appui ponctuellement sur deux parties saillantes du fond en relief de la cuve. Bien que cette mise en œuvre favorise une répartition homogène de l'air chaud dans la cuve et autour du panier et assure une stabilité du panier posé dans la cuve, celle-ci présente plusieurs inconvénients. En effet, lors du placement du panier dans la cuve, l'utilisateur doit veiller à engager la poignée de manipulation du panier sur le rebord de la cuve tout en positionnant convenablement les secondes pattes en appui sur les parties en relief du fond de la cuve ; les jeux existants dans la zone d'engagement de la poignée de manipulation sur la cuve peuvent occasionner un mauvais positionnement des deux secondes pattes sur les deux parties en relief du fond de la cuve. En outre, le frottement des secondes pattes sur le fond de la cuve peut dégrader ledit fond. Il est connu du document CN204636063U un appareil de cuisson du type friteuse à air chaud comprenant un système de soufflage d'air chaud, une cuve (2) et un panier (4), le panier comprenant un côté avant sur lequel est agencée une poignée de manipulation (3) munie d'une patte (voir figure 2) et la cuve comprenant un rebord supérieur et un côté avant sur lequel est agencée une zone de réception de la poignée de manipulation (voir figure 2), la patte prenant appui sur le rebord supérieur et la poignée de manipulation se logeant dans la zone de réception lors du positionnement du panier dans la cuve (voir figure 2), le panier comprenant une paroi externe munie d'au moins une première pièce (31) d'assemblage et la cuve comprend une paroi interne munie d'au moins une seconde pièce d'assemblage (21), l'au moins une première pièce d'assemblage et l'au moins une seconde pièce d'assemblage étant configurées pour coopérer et assurer le guidage latéral du panier lors du positionnement du panier dans la cuve jusqu'à atteindre le positionnement de la poignée de manipulation dans sa zone de réception et une position d'appui centrée du panier dans la cuve permettant de maintenir le fond du panier à distance du fond de la cuve et de caler latéralement le panier dans la cuve de manière à positionner le panier dans une position fonctionnelle de cuisson.

Cependant, un tel appareil ne permet pas un guidage latéral du panier à l'intérieur de la cuve.

### Résumé de l'invention

La présente invention met en oeuvre un appareil de cuisson du type friteuse à air chaud qui permet une répartition homogène de l'air chaud dans la cuve afin de cuire convenablement tous les aliments disposés dans le panier, tout en assurant un positionnement précis, intuitif et stable du panier dans la cuve, sans risque de dégradation du fond de ladite cuve.

L'invention est définie par les revendications ci-jointes.

A cet effet, l'invention concerne un appareil de cuisson du type friteuse à air chaud comprenant un système de soufflage d'air chaud, une cuve et un panier. L'appareil de cuisson comprend également d'autres caractéristiques que l'on trouve traditionnellement sur un tel appareil, à savoir une chambre permettant la réception de la cuve avec le panier logé dans celle-ci. Le système de soufflage d'air chaud permet quant à lui de pulser de l'air chaud dans la chambre et la cuve. Selon l'invention, le panier comprend un côté avant sur lequel est agencée une poignée de manipulation munie d'une patte et la cuve comprend un rebord supérieur et un côté avant sur lequel est agencée une zone de réception de la poignée de manipulation. La patte prend appui sur le rebord supérieur et la poignée de manipulation se loge dans la zone de réception lors du positionnement du panier dans la cuve.

Le côté avant est défini par la position de la poignée de manipulation, disposée en façade de l'appareil de cuisson une fois la cuve et le panier introduits dans la chambre dudit appareil, l'introduction se faisant d'avant en arrière par action sur ladite poignée de manipulation et inversement pour le retrait.

De manière remarquable, selon l'invention, le panier comprend une paroi externe munie d'au moins une première pièce d'assemblage et la cuve comprend une paroi interne munie d'au moins une seconde pièce d'assemblage. L'au moins une première pièce d'assemblage et l'au moins une seconde pièce d'assemblage sont configurées pour coopérer et assurer le guidage latéral du panier lors du positionnement du panier dans la cuve jusqu'à atteindre le positionnement de la poignée dans sa zone de réception et une position d'appui centrée du panier dans la cuve permettant de maintenir le fond du panier à distance du fond de la cuve et de caler latéralement le panier dans la cuve de manière à positionner le panier dans une position fonctionnelle de cuisson.

Selon une première conception de l'appareil de cuisson, une seule première pièce d'assemblage et une seule seconde pièce d'assemblage sont mises en œuvre. Le panier comprend un côté arrière muni sur sa face externe d'une première pièce d'assemblage et la cuve comprend un côté arrière muni sur sa face interne d'une seconde pièce d'assemblage. La première pièce d'assemblage et la seconde pièce d'assemblage sont configurées pour coopérer et assurer le guidage latéral du panier durant sa mise en place dans la cuve jusqu'à atteindre une position d'appui centrée du panier dans la cuve permettant de maintenir le fond du panier à distance du fond de la cuve et de caler latéralement le panier dans la cuve.

Selon une seconde conception de l'appareil de cuisson, deux premières pièces d'assemblage et deux secondes pièces d'assemblage sont mises en œuvre. Le panier comprend deux côtés latéraux munis chacun sur leurs faces externes d'une première pièce d'assemblage et la cuve comprend deux côtés latéraux munis chacun sur leurs faces internes d'une seconde pièce d'assemblage. Les deux premières pièces d'assemblage et les deux secondes pièces d'assemblage sont configurées pour coopérer et assurer le guidage latéral du panier durant sa mise en place dans la cuve jusqu'à atteindre une position d'appui centrée du panier dans la cuve permettant de maintenir le fond du panier à distance du fond de la cuve et de caler latéralement le panier dans la cuve.

On pourrait envisager d'autres variantes de conception de l'appareil de cuisson avec un nombre variable de premières pièces d'assemblage et de secondes pièces d'assemblage et dont les positions dépendront par exemple de la forme de la paroi externe du panier et de la forme de la paroi interne de la cuve.

Le guidage et le centrage assurent une mise en place intuitive du panier dans la cuve jusqu'à atteindre une position d'appui où le panier se retrouve calé dans la cuve, durant le positionnement de la poignée de manipulation dans la zone de réception. Ce calage permet de maintenir un écartement constant entre le panier et la cuve, sur tout leur périmètre, ce qui assure un flux d'air chaud uniforme sur tout le contour du panier. Les positions de l'au moins une première pièce d'assemblage et de l'au moins une seconde pièce d'assemblage respectivement sur les parois externe et interne assurent un maintien du panier dans la cuve sans devoir prendre appui sur le fond de ladite cuve, évitant ainsi toute rayure sur celui-ci durant la manipulation du panier.

Selon un mode de réalisation préférentiel de l'appareil de cuisson, chaque première pièce d'assemblage comprend deux branches de guidage s'étendant vers le haut en se rapprochant l'une de l'autre jusqu'à former un sommet. En outre, chaque seconde pièce d'assemblage comprend un élément protubérant qui vient se loger entre les deux branches lors du positionnement du panier dans la cuve. En d'autres termes, les deux branches forment plus ou moins un V inversé, la partie évasée du V facilitant l'introduction de l'élément protubérant entre les deux branches ; puis le rétrécissement du V inversé permet aux branches de guider le panier vis-à-vis de l'élément protubérant afin de centrer le panier dans la cuve, jusqu'à atteindre la pointe du V inversé où les branches sont calées et en appui contre l'élément protubérant.

On pourrait envisager une conception inverse au mode de réalisation préférentiel précité. En effet, la première pièce d'assemblage sur le panier peut comprendre l'élément protubérant et la seconde pièce d'assemblage sur la cuve peut comprendre les deux branches qui, dans ce cas, s'étendent vers le bas - et non vers le haut - en se rapprochant jusqu'à former une petite cuvette, ledit élément protubérant venant se loger entre les deux branches jusqu'à venir en butée dans la petite cuvette, lors du positionnement du panier dans la cuve.

Selon ce mode de réalisation préférentiel et pour une mise en œuvre de l'appareil de cuisson selon la première conception précitée, les extrémités inférieures des branches de guidage sont prolongées vers l'avant de l'appareil, c'est-à-dire en direction de la poignée de manipulation, par deux déflecteurs disposés en équerre vis-à-vis desdites branches, lesdits déflecteurs s'étendant sous le fond du panier. Ces déflecteurs permettent d'orienter la circulation de l'air chaud dans la cuve durant la cuisson. Ainsi, l'air chaud circule de manière contrôlée dans la cuve et le panier, pour une cuisson optimale des aliments. Ces deux déflecteurs forment une pointe orientée vers l'avant de la cuve. De préférence, les branches et les déflecteurs sont formés d'une seule et même pièce. De préférence, les branches et les déflecteurs sont en matière plastique. Les déflecteurs sont configurés pour rester distants du fond de la cuve lorsque le panier est logé dans ladite cuve, c'est-à-dire lorsque que le sommet entre les deux branches est calé sur l'élément protubérant, afin d'éviter tout risque de rayure sur le fond de la cuve.

Selon ce mode de réalisation préférentiel de l'appareil de cuisson mis en œuvre selon la première conception ou selon la seconde conception, voire selon toute autre variante de conception, chaque élément protubérant est formé d'un bossage sur la paroi interne de la cuve. En variante, chaque élément protubérant peut être formé d'une pièce rapportée sur la paroi interne de la cuve.

Selon l'appareil de cuisson objet de l'invention, un système de verrouillage est agencé entre la poignée de manipulation et la zone de réception de sorte à maintenir assemblés le panier et la cuve. Ce système de verrouillage est désactivable par un bouton de commande de sorte à séparer le panier de la cuve. Ces caractéristiques sont déjà connues sur les appareils de cuisson du type friteuse.

### Brève description des figures

La description suivante d'un mode de réalisation non limitatif de l'appareil de cuisson du type friteuse à air chaud met en évidence les caractéristiques et avantages de la présente invention. Cette description s'appuie sur des figures, parmi lesquelles :
- La figure 1 illustre un panier logé dans une cuve, le panier et la cuve étant assemblés entre eux ;
- La figure 2 montre une vue en coupe de côté de la figure 1 ;
- La figure 3 montre en perspective, de dessus, la cuve seule ;
- Les figures 4 et 5 montrent en perspective le panier seul, selon deux angles de vues différents, le fond du panier n'étant pas illustré sur la figure 5 ;
- La figure 6 montre en perspective une réalisation préférentielle en une seule pièce, de la première pièce d'assemblage et des déflecteurs.

### Description détaillée

Les figures 1 à 6 n'illustrent pas dans son ensemble l'appareil de cuisson du type friteuse à air chaud, mais uniquement les caractéristiques objets de l'invention qui portent sur la cuve et le panier. Les autres caractéristiques (système de soufflage d'air chaud, chambre dans laquelle sont insérés la cuve et le panier ...) d'un tel appareil sont déjà connues, raison pour laquelle elles ne sont pas décrites ci-après. L'homme du métier pourra se référer aux friteuses à air chaud existant déjà sur le marché.

Les figures 1 et 2 montrent un panier 1 placé dans une cuve 2 et assemblé avec celle-ci. Comme l'illustrent les figures 1 à 3, la cuve 2 comprend un rebord supérieur 3, un fond 4, un côté avant 5, un côté arrière 6, deux côtés latéraux 7, 8 et une façade 9 qui est agencée sur le côté avant 5. Une zone de réception 10 est aménagée sur la façade 9. Le rebord supérieur 3 comprend une petite encoche 11 disposée en regard de la zone de réception 10. La zone de réception 10 comprend dans sa partie inférieure 10a une ouverture 12. Comme l'illustrent les figures 1, 2, 4 et 5, le panier 1 comprend un côté avant 13, un côté arrière 14, deux côtés latéraux 15, 16, un fond 17 et une poignée de manipulation 18 qui est fixée au côté avant 13 au moyen d'une patte 19 présentant une forme recourbée. La poignée de manipulation 18 comprend un corps 20 de dimensions adaptées à la zone de réception 10 et un manche 21 pour la préhension. Un bouton 22 de commande est agencé en partie supérieure du manche 21 pour actionner un mécanisme de transmission 23 agissant sur un loquet 24 pour le déverrouillage du panier 1 vis-à-vis de la cuve 2. Lorsque le panier 1 est placé dans la cuve 2, la patte 19 se positionne dans la petite encoche 11, le corps 20 se positionne dans la zone de réception 10 et le loquet 24 pénètre dans l'ouverture 12 et s'enclenche sous le bord arrière 25 de cette ouverture 12, assurant le verrouillage du panier 1 sur la cuve 2. L'actionnement du bouton 22 permet de dégager le loquet 24 du bord arrière 25 de l'ouverture 12, pour déverrouiller le panier 1 et l'extraire de la cuve 2. Deux doigts 26, 27 sont agencés sur les côtés latéraux 20a, 20b du corps 20 et se positionnent dans des encoches 28, 29 de guidage agencées sur les côtés latéraux 10b, 10c de la zone de réception 10 ; lorsque les doigts 26, 27 sont logés dans les encoches 28, 29, le panier 1 est calé en translation d'avant en arrière vis-à-vis de la cuve 2 et le côté avant 13 du panier 1 est calé en translation latéralement vis-à-vis du côté avant 5 de la cuve 2.

Ainsi, le mécanisme de transmission 23, le loquet 24 et le bord arrière 25 forment un système de verrouillage agencé entre la poignée de manipulation 18 et la zone de réception 10 de sorte à maintenir assemblés le panier 1 et la cuve 2 dans une position fonctionnelle de cuisson, ledit système de verrouillage étant désactivable par un bouton 22 de commande de sorte à séparer le panier de la cuve.

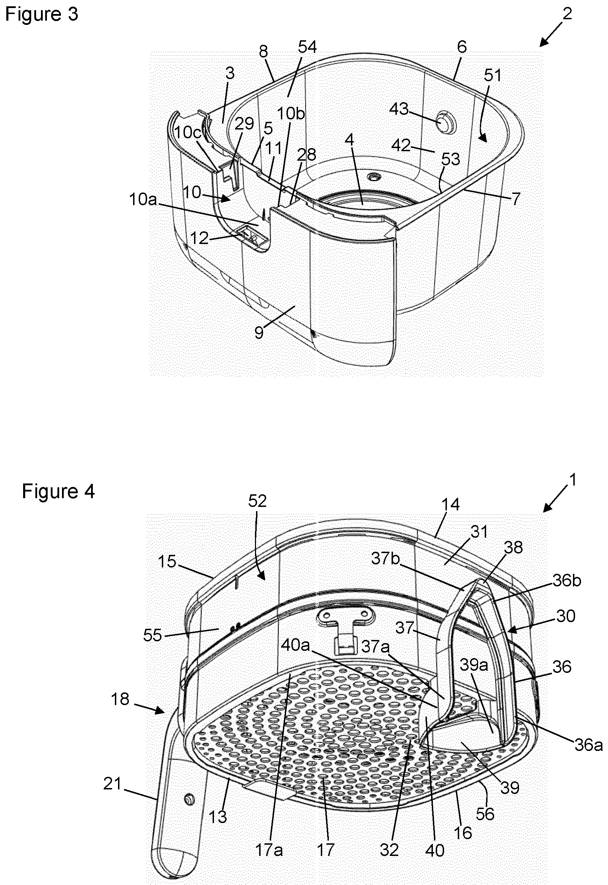

Tel que l'illustrent les figures 4 à 6, le panier 1 comprend une première pièce 30 d'assemblage qui est de préférence réalisée en matière plastique, par exemple un polysulfure de phénylène (PPS). Cette pièce 30 est rapportée sur une face externe 31 du côté arrière 14 et sur une face inférieure 32 du fond 17 au moyen de trois points d'assemblage 33, 34, 35, ledit assemblage étant réalisé par vissage sur le contour 17a du fond et sur le côté arrière 14. La pièce 30 comprend deux branches 36, 37 de guidage dont les extrémités inférieures 36a, 37a sont évasées et les extrémités supérieures 36b, 37b se rejoignent en un sommet 38. Les deux branches 36, 37 sont disposées contre la face externe 31 du côté arrière 14. La pièce 30 comprend également deux déflecteurs 39, 40 qui sont disposés en équerre vis-à-vis des branches 36, 37 et sous la face inférieure 32 du fond 17. Les extrémités arrière 39a, 40a des déflecteurs 39, 40 prolongent les extrémités inférieures 36a, 37a des branches 36, 37 et les extrémités avant 39b, 40b des déflecteurs 39, 40 se rejoignent pour former une pointe 41. Les branches 36, 37 sont disposées symétriquement entre elles par rapport au plan médian du panier 1, le sommet 38 étant situé dans ce plan médian. De même, les déflecteurs 39, 40 sont disposés symétriquement entre eux par rapport au plan médian du panier 1.

Tel que l'illustre la figure 3, la face interne 42 du côté arrière 6 de la cuve 2 comprend une seconde pièce d'assemblage comportant un élément protubérant 43 qui est mis en œuvre en réalisant un bossage sur ledit côté arrière 6. On pourrait toutefois rapporter par vissage un plot (non illustré) sur cette face interne 42 afin de mettre en œuvre ledit élément protubérant 43. L'élément protubérant 43 est disposé dans le plan médian de la cuve 2.

Tel que l'illustrent les figures 1 et 2, lors de la mise en place du panier 1 dans la cuve 2, les extrémités inférieures 36a, 37a des branches 36, 37 se positionnent chacune d'un côté de l'élément protubérant 43, la forme évasée des branches 36, 37 facilitant l'introduction de l'élément protubérant 43 entre lesdites extrémités inférieures 36a, 37a. durant l'enfoncement du panier 1 dans la cuve 2, le rétrécissement de l'écartement entre les branches 36, 37 permet de recentrer le sommet 38 vis-à-vis de l'élément protubérant 43, jusqu'à ce que ledit sommet 38 vienne en butée contre ledit élément protubérant 43. Dans cette position de butée illustrée sur les figures 1 et 2, le fond 17 du panier 1 est distant du fond 4 de la cuve 2 et positionné dans une position fonctionnelle de cuisson. De même, les déflecteurs 39, 40 sont hors de contact du fond 4 de la cuve 2. En outre, l'élément protubérant 43 est calé entre les extrémités supérieures 36b, 37b des branches 36, 37, ce qui bloque la translation latérale du côté arrière 14 du panier 1 vis-à-vis du côté arrière 6 de la cuve 2. Comme décrit précédemment, une fois le corps 20 de la poignée de manipulation 18 inséré dans la zone de réception, les doigts 26, 27 dudit corps 20 sont calés d'avant en arrière dans les encoches 28, 29 sur ladite zone de réception, ce qui bloque toute translation d'avant en arrière (et inversement) entre le panier 1 et la cuve 2 et, ainsi, assure le maintien du sommet 38 en butée contre l'élément protubérant 43. En d'autres termes, l'élément protubérant 43 ne peut pas se dégager des deux branches 36, 37. Le calage en translation latéralement des côtés avant 13 et arrière 14 du panier 1 vis-à-vis des côtés avant 5 et arrière 6 de la cuve 2 et le calage en translation d'avant en arrière (et inversement) du panier 1 vis-à-vis de la cuve 2 permettent de maintenir le panier 1 centré vis-à-vis de la cuve 2 et, ainsi, de maintenir un espace 44 constant entre la périphérie du panier 1 et la périphérie de la cuve 2.

Ainsi, la mise en place précise du panier 1 dans la cuve 2 s'effectue intuitivement grâce aux branches 36, 37 et à l'élément protubérant 43 qui guident l'insertion du panier 1 dans la cuve 2. L'espace 44 constant entre la périphérie du panier 1 et la périphérie de la cuve 2 assure une répartition homogène de l'air chaud dans la cuve 2, autour du panier 1. Le maintien du fond 17 du panier 1 à distance du fond 4 de la cuve 2 assure également la circulation de l'air chaud de manière homogène sous le panier 1. La présence des déflecteurs 39, 40 sous le panier 1 permet d'orienter le flux d'air chaud et de le faire circuler convenablement dans la cuve 2 et le panier 1.

D'autres caractéristiques sont envisageables sans sortir du cadre de l'invention.

Tel que l'illustrent les figures 1, 2, 4 et 5, le fond 17 du panier 1 est amovible pour faciliter son nettoyage, voire pour changer de fond 17 selon le type des aliments à cuire. Pour cela le fond 17 repose sur le contour 17a et est maintenu en position grâce à des lamelles élastiques 45, 46.

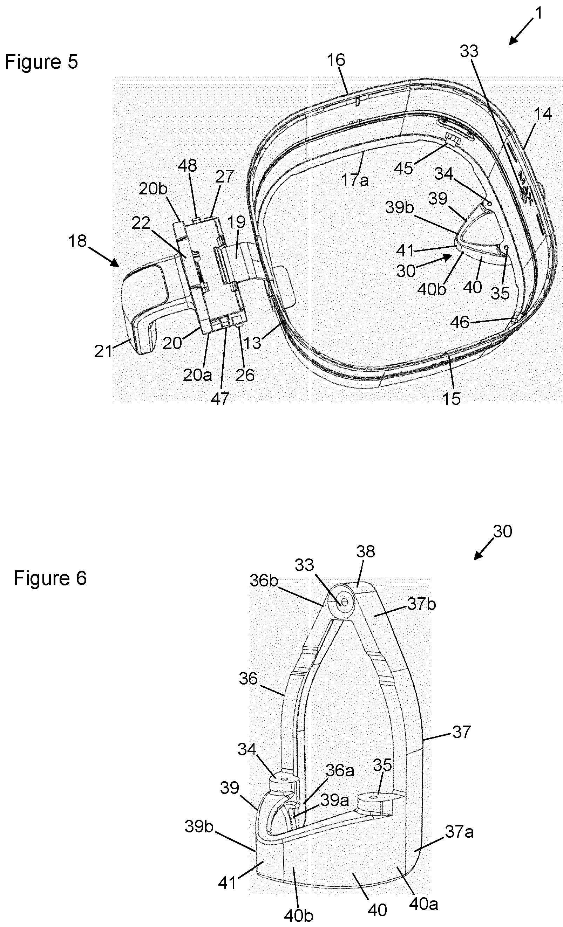

La poignée de manipulation 18 est amovible du panier 1 pour faciliter le nettoyage du panier 1. Pour cela, tel que l'illustrent les figures 2 et 5, le corps 20 de la poignée de manipulation 18 comprend sur ses côtés latéraux 20a, 20b deux gâchettes 47, 48 qui peuvent être actionnées pour déplacer un pêne 49 sur le corps 20 et le sortir d'une gâche 50 agencée sur la patte 19, de sorte à déverrouiller la patte 19 vis-à-vis du corps 20 et à permettre le dégagement vers le bas de la poignée de manipulation 18 par rapport à la patte 19.

Des variantes de conception de l'invention sont envisageables.

On peut par exemple agencer sur la face externe 31 du côté arrière 14 du panier 1, un élément protubérant similaire à l'élément protubérant 43 et agencer sur la face interne 42 du côté arrière 6 de la cuve 2, deux branches de conception similaire aux branches 36, 37, mais dont le sens est inversé de sorte que le sommet 38 se retrouve en bas et forme une petite cuvette dans lequel vient se loger l'élément protubérant du panier 1 lors de sa mise en place dans la cuve 2. Dans ce cas, les déflecteurs 39, 40 seront mis en œuvre au moyen d'une pièce indépendante, dans une position similaire à celle illustrée en figure 4.

On peut aussi prévoir plusieurs éléments protubérants similaires à l'élément protubérant 43 et agencés sur la paroi interne 51 de la cuve 2 et prévoir autant de branches similaires aux deux branches 36, 37 et agencées sur la paroi externe 52 du panier 1 en correspondance avec les éléments protubérants. Par exemple, deux éléments protubérants sont agencés sur les faces internes 53, 54 des côtés latéraux 7,8 de la cuve 2 et deux jeux de deux branches sont agencés sur les faces externes 55, 56 des côtés latéraux 15, 16 du panier 1. Dans ce cas, les déflecteurs 39, 40 seront mis en œuvre au moyen d'une pièce indépendante, dans une position similaire à celle illustrée en figure 4. On pourra aussi inverser les positions des éléments protubérants et des branches sur les parois interne 51 et externe 52, comme expliqué ci-dessus.

## Revendications

1. Appareil de cuisson du type friteuse à air chaud comprenant un système de soufflage d'air chaud, une cuve (2) et un panier (1), le panier (1) comprenant un côté avant (13) sur lequel est agencée une poignée de manipulation (18) munie d'une patte (19) et la cuve comprenant un rebord supérieur (3) et un côté avant (5) sur lequel est agencée une zone de réception (10) de la poignée de manipulation, la patte prenant appui sur le rebord supérieur et la poignée de manipulation se logeant dans la zone de réception lors du positionnement du panier dans la cuve, le panier (1) comprenant une paroi externe (52) munie d'au moins une première pièce (30) d'assemblage et la cuve (2) comprenant une paroi interne (51) munie d'au moins une seconde pièce d'assemblage, l'au moins une première pièce d'assemblage et l'au moins une seconde pièce d'assemblage étant configurées pour coopérer et assurer le guidage latéral du panier lors du positionnement du panier (1) dans la cuve (2) jusqu'à atteindre le positionnement de la poignée de manipulation (18) dans sa zone de réception et une position d'appui centrée du panier dans la cuve permettant de maintenir le fond (17) du panier à distance du fond (4) de la cuve et de caler latéralement le panier dans la cuve de manière à positionner le panier (1) dans une position fonctionnelle de cuisson, **caractérisé en ce que** :
- le panier (1) comprend un côté arrière (14) muni sur sa face externe (31) d'une première pièce (30) d'assemblage et la cuve (2) comprend un côté arrière (6) muni sur sa face interne (42) d'une seconde pièce d'assemblage, la première pièce d'assemblage et la seconde pièce d'assemblage étant configurées pour coopérer et assurer le guidage latéral du panier durant sa mise en place dans la cuve jusqu'à atteindre une position d'appui centrée du panier dans la cuve permettant de maintenir le fond (17) du panier à distance du fond (4) de la cuve et de caler latéralement le panier dans la cuve, ou bien
- le panier (1) comprend deux côtés latéraux (15, 16) munis chacun sur leurs faces externes (55, 56) d'une première pièce d'assemblage et la cuve (2) comprend deux côtés latéraux (7, 8) munis chacun sur leurs faces internes (53, 54) d'une seconde pièce d'assemblage, les deux premières pièces d'assemblage et les deux secondes pièces d'assemblage étant configurées pour coopérer et assurer le guidage latéral du panier durant sa mise en place dans la cuve jusqu'à atteindre une position d'appui centrée du panier dans la cuve permettant de maintenir le fond (17) du panier à distance du fond (4) de la cuve et de caler latéralement le panier dans la cuve.

2. Appareil de cuisson selon la revendication 1, dans lequel chaque première pièce d'assemblage comprend deux branches (36, 37) de guidage s'étendant vers le haut en se rapprochant l'une de l'autre jusqu'à former un sommet (38) et chaque seconde pièce d'assemblage comprend un élément protubérant (43) qui vient se loger entre les deux branches lors du positionnement du panier (1) dans la cuve (2).

3. Appareil de cuisson selon la revendication 2, dans lequel les extrémités inférieures (36a, 37a) des branches (36, 37) de guidage sont prolongées vers l'avant de l'appareil par deux déflecteurs (39, 40) disposés en équerre vis-à-vis desdites branches et s'étendant sous le fond (17) du panier (1), lesdits déflecteurs permettant d'orienter la circulation de l'air chaud dans la cuve (2).

4. Appareil de cuisson selon la revendication 3, dans lequel les deux déflecteurs (39, 40) forment une pointe (41) orientée vers l'avant de la cuve (2).

5. Appareil de cuisson selon l'une quelconque des revendications 3 ou 4, dans lequel les branches (36, 37) et les déflecteurs (39, 40) sont formés d'une seule et même pièce (30).

6. Appareil de cuisson selon l'une quelconque des revendications 3 à 5, dans lequel les branches (36, 37) et les déflecteurs (39, 40) sont en matière plastique.

7. Appareil de cuisson selon l'une quelconque des revendications 3 à 6, dans lequel les déflecteurs (39, 40) sont configurés pour rester distants du fond (4) de la cuve (2) lorsque le panier (1) est logé dans ladite cuve.

8. Appareil de cuisson selon l'une quelconque des revendications 2 à 7, dans lequel chaque élément protubérant (43) est formé d'un bossage sur la paroi interne (51) de la cuve (2).

9. Appareil de cuisson selon l'une quelconque des revendications 2 à 7, dans lequel chaque élément protubérant (43) est formé d'une pièce rapportée sur la paroi interne (51) de la cuve (2).

10. Appareil de cuisson selon l'une quelconque des revendications 1 à 9, dans lequel un système de verrouillage (23, 24, 25) est agencé entre la poignée de manipulation (18) et la zone de réception (10) de sorte à maintenir assemblés le panier (1) et la cuve (2), ledit système de verrouillage étant désactivable par un bouton (22) de commande de sorte à séparer le panier de la cuve.

## Patentansprüche

1. Kochgerät des Typs Heißluftfritteuse, umfassend ein Heißluftgebläse-System, einen Behälter (2) und einen Korb (1), wobei der Korb (1) eine Vorderseite (13) umfasst, an der ein Handgriff (18) mit einem Verbindungsteil (19) angebracht ist, und der Behälter einen oberen Rand (3) und eine Vorderseite (5) umfasst, an der ein Aufnahmebereich (10) für den Handgriff angeordnet ist, wobei das Verbindungsteil am oberen Rand anliegt und der Handgriff beim Einsetzen des Korbs in den Behälter in den Aufnahmebereich einrastet, der Korb (1) eine äußere Wand (52) mit mindestens einem ersten Verbindungsstück (30) und der Behälter (2) eine innere Wand (51) mit mindestens einem zweiten Verbindungsstück umfasst, wobei das mindestens eine erste Verbindungsstück und das mindestens eine zweite Verbindungsstück konfiguriert sind, um zusammenzuwirken und die seitliche Führung des Korbes beim Einsetzen des Korbes (1) in den Behälter (2) zu gewährleisten, bis der Handgriff (18) in seinem Aufnahmebereich positioniert ist und eine zentrierte Auflageposition des Korbes im Behälter erreicht ist, die es ermöglicht, den Boden (17) des Korbes in einem Abstand zum Boden (4) des Behälters zu halten und den Korb seitlich im Behälter zu arretieren, um den Korb (1) in einer funktionalen Kochposition zu positionieren, **gekennzeichnet dadurch, dass**:
• der Korb (1) eine Rückseite (14) umfasst, die an ihrer äußeren Fläche (31) mit einem ersten Verbindungsstück (30) ausgestattet ist, und der Behälter (2) eine Rückseite (6) umfasst, die an ihrer inneren Fläche (42) mit einem zweiten Verbindungsstück ausgestattet ist, wobei das erste Verbindungsstück und das zweite Verbindungsstück konfiguriert sind, um zusammenzuwirken und die seitliche Führung des Korbes beim Einsetzen in den Behälter zu gewährleisten, bis eine zentrierte Auflageposition des Korbes im Behälter erreicht ist, die es ermöglicht, den Boden (17) des Korbes in einem Abstand zum Boden (4) des Behälters zu halten und den Korb seitlich im Behälter zu arretieren, oder
• der Korb (1) umfasst zwei Seitenflächen (15, 16), die jeweils an ihren äußeren Flächen (55, 56) mit einem ersten Verbindungsstück ausgestattet sind, und der Behälter (2) umfasst zwei Seitenflächen (7, 8), die jeweils an ihren inneren Flächen (53, 54) mit einem zweiten Verbindungsstück ausgestattet sind, wobei die zwei ersten Verbindungsstücke und die zwei zweiten Verbindungsstücke konfiguriert sind, um zusammenzuwirken und die seitliche Führung des Korbes beim Einsetzen in den Behälter zu gewährleisten, bis eine zentrierte Auflageposition des Korbes im Behälter erreicht ist, die es ermöglicht, den Boden (17) des Korbes in einem Abstand zum Boden (4) des Behälters zu halten und den Korb seitlich im Behälter zu arretieren.

2. Kochgerät nach Anspruch 1, bei welchem jedes erste Verbindungsstück zwei Führungsschenkel (36, 37) umfasst, die sich aufwärts erstrecken und zusammenlaufen, um einen Gipfel (38) zu bilden, und jedes zweite Verbindungsstück umfasst ein vorstehendes Element (43), das sich zwischen den beiden Schenkeln einfügt, wenn der Korb (1) in den Behälter (2) eingesetzt wird.

3. Kochgerät nach Anspruch 2, bei welchem die unteren Enden (36a, 37a) der Führungsschenkel (36, 37) nach vorne durch zwei Ablenkbleche (39, 40) verlängert werden, die rechtwinklig zu besagten Schenkeln angeordnet sind und sich unterhalb des Bodens (17) des Korbes (1) erstrecken, wobei besagte Ablenkbleche es ermöglichen, die Heißluftzirkulation im Behälter (2) zu lenken.

4. Kochgerät nach Anspruch 3, bei welchem die zwei Ablenkbleche (39, 40) eine Spitze (41) bilden, die nach vorne zum Behälter (2) ausgerichtet ist.

5. Kochgerät nach einem der Ansprüche 3 oder 4, bei welchem die Schenkel (36, 37) und die Ablenkbleche (39, 40) aus einem einzigen Stück (30) geformt sind.

6. Kochgerät nach einem der Ansprüche 3 bis 5, bei welchem die Schenkel (36, 37) und die Ablenkbleche (39, 40) aus Kunststoff sind.

7. Kochgerät nach einem der Ansprüche 3 bis 6, bei welchem die Ablenkbleche (39, 40) konfiguriert sind, um vom Boden (4) des Behälters (2) entfernt zu bleiben, wenn der Korb (1) in besagtem Behälter untergebracht ist.

8. Kochgerät nach einem der Ansprüche 2 bis 7, bei welchem jedes vorstehende Element (43) als Erhebung an der Innenwand (51) des Behälters (2) ausgebildet ist.

9. Kochgerät nach einem der Ansprüche 2 bis 7, bei welchem jedes vorstehende Element (43) als ein hinzugefügtes Stück an der Innenwand (51) des Behälters (2) ausgebildet ist.

10. Kochgerät nach einem der Ansprüche 1 bis 9, bei welchem ein Verriegelungssystem (23, 24, 25) zwischen dem Handgriff (18) und dem Aufnahmebereich (10) angeordnet ist, um den Korb (1) und den Behälter (2) zusammenzuhalten, wobei besagtes Verriegelungssystem durch eine Steuerungstaste (22) deaktivierbar ist, um den Korb vom Behälter zu trennen.

## Claims

1. A cooking apparatus of the hot air fryer type comprising a hot air blowing system, a bowl (2) and a basket (1), the basket (1) including a front side (13) on which is arranged a handling handle (18) equipped with a tab (19) and the bowl including an upper rim (3) and a front side (5) on which is arranged a receiving area (10) for the handling handle, the tab resting on the upper rim and the handling handle fitting into the receiving area when positioning the basket in the bowl, the basket (1) including an external wall (52) equipped with at least one first assembly piece (30) and the bowl (2) including an internal wall (51) equipped with at least one second assembly piece, the at least one first assembly piece and the at least one second assembly piece being configured to cooperate and ensure the lateral guidance of the basket when positioning the basket (1) in the bowl (2) until reaching the positioning of the handling handle (18) in its receiving area and a centered resting position of the basket in the bowl allowing to maintain the bottom (17) of the basket at a distance from the bottom (4) of the bowl and to laterally wedge the basket in the bowl in a manner to position the basket (1) in a functional cooking position, **characterized by**:
• the basket (1) comprising a rear side (14) equipped on its external face (31) with a first assembly piece (30) and the bowl (2) comprising a rear side (6) equipped on its internal face (42) with a second assembly piece, the first assembly piece and the second assembly piece being configured to cooperate and ensure the lateral guidance of the basket during its placement in the bowl until reaching a centered resting position of the basket in the bowl allowing to maintain the bottom (17) of the basket at a distance from the bottom (4) of the bowl and to laterally wedge the basket in the bowl, or
• the basket (1) comprises two lateral sides (15, 16) each equipped on their external faces (55, 56) with a first assembly piece and the bowl (2) comprises two lateral sides (7, 8) each equipped on their internal faces (53, 54) with a second assembly piece, the two first assembly pieces and the two second assembly pieces being configured to cooperate and ensure the lateral guidance of the basket during its placement in the bowl until reaching a centered resting position of the basket in the bowl allowing to maintain the bottom (17) of the basket at a distance from the bottom (4) of the bowl and to laterally wedge the basket in the bowl.

2. A cooking apparatus according to claim 1, in which each first assembly piece comprises two guiding branches (36, 37) extending upward by converging until forming a summit (38) and each second assembly piece comprises a protruding element (43) which fits between the two branches when positioning the basket (1) in the bowl (2).

3. A cooking apparatus according to claim 2, in which the lower ends (36a, 37a) of the guiding branches (36, 37) are extended forward of the apparatus by two deflectors (39, 40) disposed at right angles relative to said branches and extending beneath the bottom (17) of the basket (1), said deflectors allowing to guide the hot air circulation in the bowl (2).

4. A cooking apparatus according to claim 3, in which the two deflectors (39, 40) form a point (41) oriented forward of the bowl (2).

5. A cooking apparatus according to any one of claims 3 or 4, in which the branches (36, 37) and the deflectors (39, 40) are formed of a single piece (30).

6. A cooking apparatus according to any one of claims 3 to 5, in which the branches (36, 37) and the deflectors (39, 40) are made of plastic material.

7. A cooking apparatus according to any one of claims 3 to 6, in which the deflectors (39, 40) are configured to remain distant from the bottom (4) of the bowl (2) when the basket (1) is housed in said bowl.

8. A cooking apparatus according to any one of claims 2 to 7, in which each protruding element (43) is formed as a boss on the internal wall (51) of the bowl (2).

9. A cooking apparatus according to any one of claims 2 to 7, in which each protruding element (43) is formed as an added piece on the internal wall (51) of the bowl (2).

10. A cooking apparatus according to any one of claims 1 to 9, in which a locking system (23, 24, 25) is arranged between the handling handle (18) and the receiving area (10) so as to keep the basket (1) and the bowl (2) assembled, said locking system being deactivatable by a control button (22) in order to separate the basket from the bowl.
